# EUROPEAN PATENT SPECIFICATION

(11) **EP 1 389 552 B1**
(45) Date of publication and mention of the grant of the patent: **11.05.2005**
(21) Application number: 03018458.4
(22) Date of filing: 14.08.2003
(51) Int. Cl.: B60K 1/04

(54) **Electrically-Driven Vehicle**
Elektrisch angetriebenes Fahrzeug
Véhicule à commande électrique

(30) Priority: 16.08.2002 JP 2002237512
(43) Date of publication of application: 18.02.2004
(73) Proprietor: YAMAHA HATSUDOKI KABUSHIKI KAISHA, Iwata-shi Shizuoka-ken (JP)
(72) Inventor: Kohda, Hideo, Iwata-shi, Shizuoka-ken (JP); Koizumi, Atsushi, Iwata-shi, Shizuoka-ken (JP); Okamoto, Ikuo, Iwata-shi, Shizuoka-ken (JP); Nagase, Takeshi, Iwata-shi, Shizuoka-ken (JP); Terada, Junji, Iwata-shi, Shizuoka-ken (JP)
(74) Representative: Grünecker, Kinkeldey, Stockmair & Schwanhäusser Anwaltssozietät

(56) References cited:
- EP-A- 1 132 251
- EP-A- 1 169 910
- EP-A- 1 215 111
- US-A- 3 787 086
- US-A- 5 460 234
- US-A- 5 704 644

## Description

This invention relates to an electrically-driven vehicle, in particular to electrically-driven two-wheelers to travel with a mounted battery as a power source, according to the preamble of the independent claim 1.

Generally, vehicles using, for example, gasoline are predominant but the use of gasoline is not desirable from the viewpoint of protection of global environment, and so electrically-driven vehicles have been developed, in which clean energy compatible with global environment is used for a power source.

Batteries are generally used for a power source of clean energy. While batteries have been improved yearly and miniaturized, they nevertheless require a comparatively large occupied space. In particular, electrically-driven vehicles generally have a simple vehicle body structure, in which a steering handle and a front wheel are arranged forwardly of a vehicle body frame and a rear wheel is arranged rearwardly of the vehicle body frame.

Therefore, there is involved difficulty in ensuring a space, in which a battery having a comparatively large occupied space is arranged. Generally, a battery serving as a power source is arranged and set in a vehicle body frame, so that a part of an area, in which the battery is arranged, is greatly expanded, and such arrangement is not desirable because a foot rest space is restricted from location to location and attractiveness is unfavorable.

Also, the work for taking a battery in and out at the time of maintenance is very troublesome and a problem is caused in terms of workability.

From EP 1 132 251 A1 an electrically-driven vehicle as indicated above is known. In particular, a hybrid-driven device having a battery and a fuel cell as power sources for a motor for driving the vehicle, a main switch for switching on the power sources, and a device controller is shown, wherein the motor, battery and fuel cell are arranged as module units, respectively, under a seat.

US-A-3 787 086 discloses a lift truck with a seat support member being pivoted at one side and a compartment housing a power source apparatus, such as an electric storage battery, wherein the compartment is arranged below the seat support member.

It is an objective of the present invention to improve an electrically-driven vehicle as indicated above so as to be capable to housing securely a battery without influences from rainwater or the like and be excellent in workability at the time of charging.

This objective is solved according to the present invention by an electrically-driven vehicle comprising a seat, a base supporting the seat on a body frame and an electric power source, wherein the base is provided with a mounting chamber for receiving the power source, and wherein it is provided a power source holding means restraining a vertical movements of the power source, in particular when the seat is in its riding position, and when pivoted enabling mounting or taking out of the power source.

According to a preferred embodiment, the base comprises a base frame, in particular composed of right and left pipes extending upward from a rear end of the body frame, and a base casing provided inside the base frame, wherein the mounting chamber is provided inside the base casing.

Beneficially, the base supporting the seat is smaller in lateral width than the seat, and defines widely opened spaces forwardly of the base and rearwardly of the base and above a rear wheel, the base being inclined rearward at a predetermined angle relative to a vertical position.

Further beneficially, an upper portion of the mounting chamber is covered by the seat in a riding position of the seat.

Still further preferably, there is provided a hinge member enabling pivoting of the seat relative to the base.

According to a further preferred embodiment, an upper opening of the mounting chamber serves as a taking-in-and-out port for the power source, when the seat is pivoted. Therein, it is preferable if the taking-in-and-out port is provided on an outer peripheral wall of the base supporting the seat.

In addition, a bottom portion of the mounting chamber may constitute a power source support tray provided with joining terminals, which can be electrically connected to feeding terminals of the power source, said power source support tray in particular being an independent unit. Therein, cable connectors for the power source or for communication may be joined on a back surface side of the bottom of the power source support tray, and/or the power source support tray may serve as a cross member of the body frame connecting respective parts of the base frame.

According to another embodiment, a cover member is provided along the body frame being extended below the power source support tray, in particular below the area in which the cable connectors are joined together.

According to still another embodiment, joining terminals are provided on an upwardly inclined side of the bottom of the power source support tray and a drain hole is provided on a downwardly inclined side of the bottom.

According to yet another embodiment, there is provided a guide means adapted to guide the power source to be correctly inserted and set in the mounting chamber. Therein, the power source support tray may be provided on at least either of both sides thereof with a vertically lengthy guide member, by which feeding terminals of the power source are guided to joining terminals on the bottom of the power source support tray.

Beneficially, the power source is formed to be longitudinal with a width smaller than a length, and is provided on at least an upper end thereof with a handle portion and a charging terminal port and on a lower end thereof with a power source control circuit unit, which is provided with feeding terminals. Therein, the power source may be structured such that the handle portion and the charging terminal port are exposed to an upper portion of the mounting chamber when the seat is pivoted. Also, a direction, in which the charging terminal port of the power source is inserted, may be one of an inclined axis inclined at a predetermined angle relative to a vertical axis.

According to still another preferred embodiment, the power source is a battery or a fuel cell providing electric power. Moreover, the vehicle may be a two-wheeled vehicle or a three-wheeled vehicle.

In the following, the present invention is explained in greater detail with respect to several embodiments thereof in conjunction with the accompanying drawings, wherein:
- Fig. 1: is a schematic, side view showing an electrically-driven two-wheeler being an electrically-driven vehicle according to an embodiment;
- Fig. 2: is a schematic view illustrating a state, in which a battery support tray and a mounted battery are mounted;
- Fig. 3: is a schematic, fragmentary view illustrating a state, in which a seat is mounted;
- Fig. 4: is a schematic, perspective view showing a battery mounting chamber as viewed from above with a seat and a middle lid opened;
- Fig. 5: is a schematic, perspective view, similar to Fig. 4, illustrating a state, in which the middle lid is closed;
- Fig. 6: is a schematic view showing a charging terminal socket of a battery charger inserted into a charging terminal port of the mounted battery;
- Fig. 7: is a schematic view illustrating a state, in which a handle standing is mounted;
- Fig. 8: is a schematic, perspective view showing the battery support tray;
- Fig. 9: is a front view showing the mounted battery;
- Fig. 10: is a cross sectional view showing an interior of the mounted battery;
- Fig. 11: is a bottom view showing the mounted battery;
- Fig. 12: is a schematic, plan view showing the mounted battery;
- Fig. 13: is a cross sectional view taken along the line A - A with the interior of Fig. 9 omitted;
- Fig. 14: is a side view showing the mounted battery;
- Fig. 15: is a rear view showing the mounted battery; and
- Fig. 16: is a schematic view partially illustrating a state of connection of secondary cells.

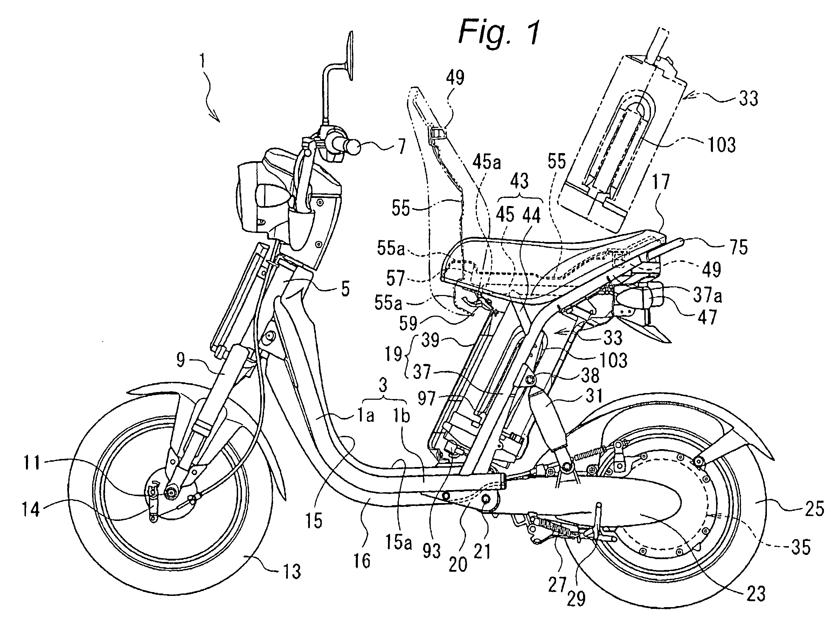

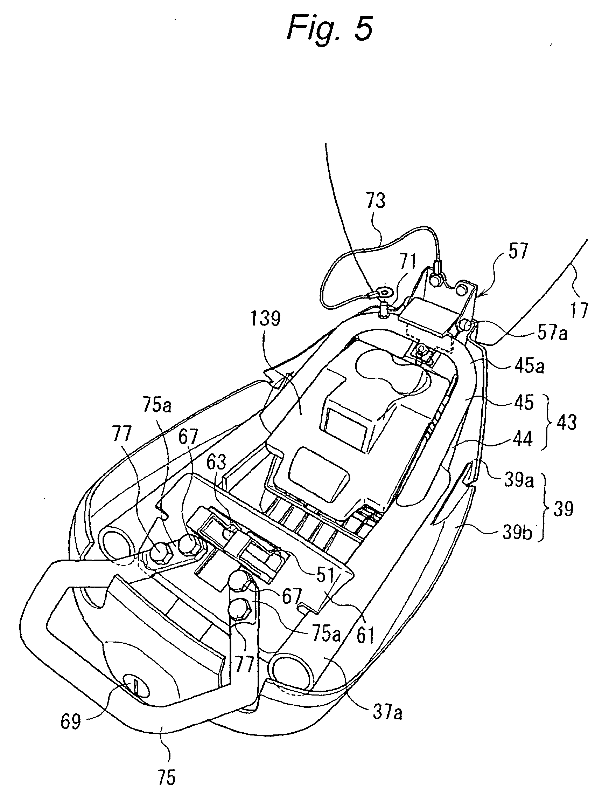

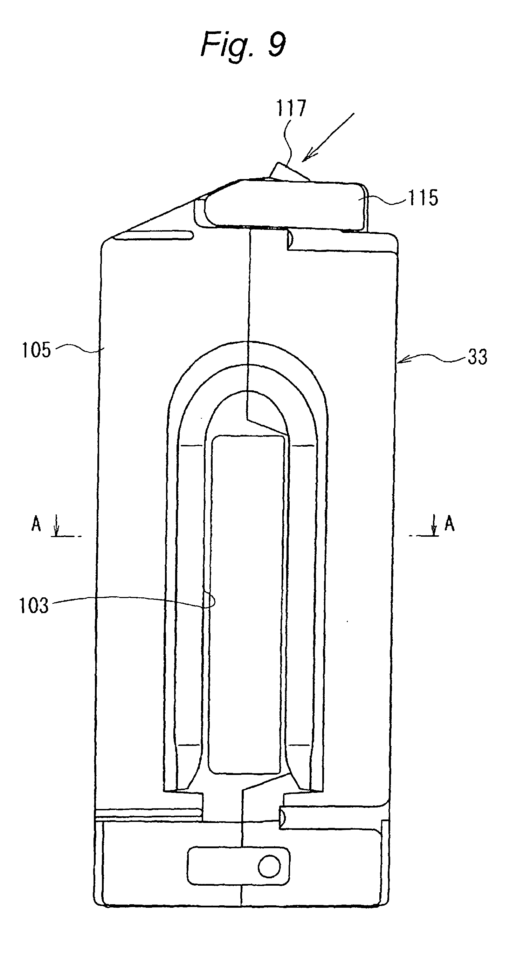

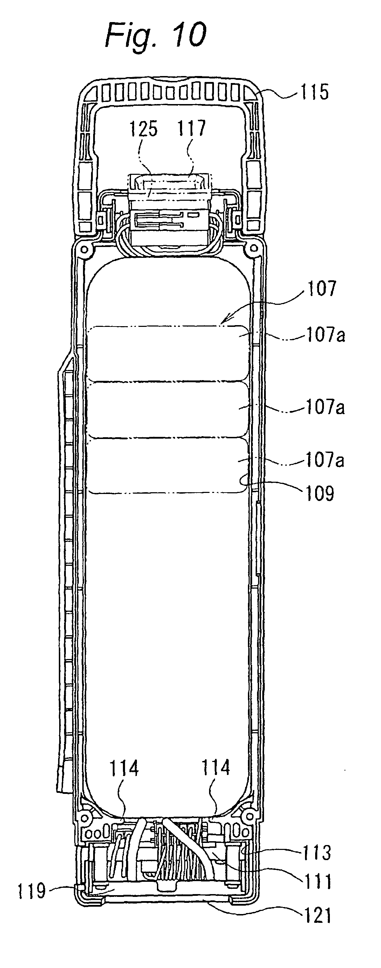

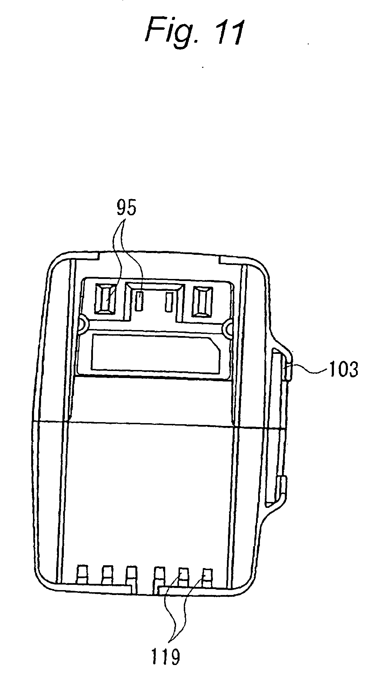

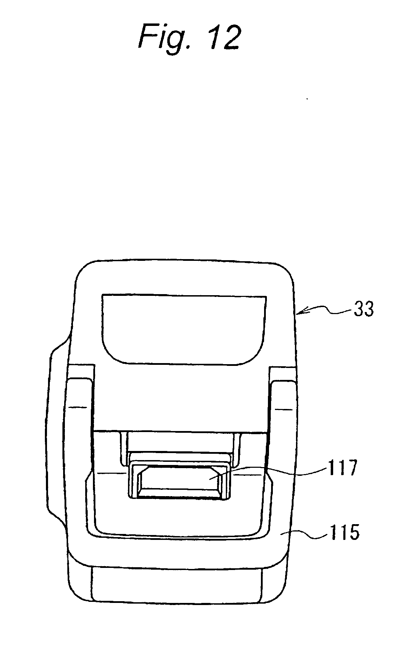

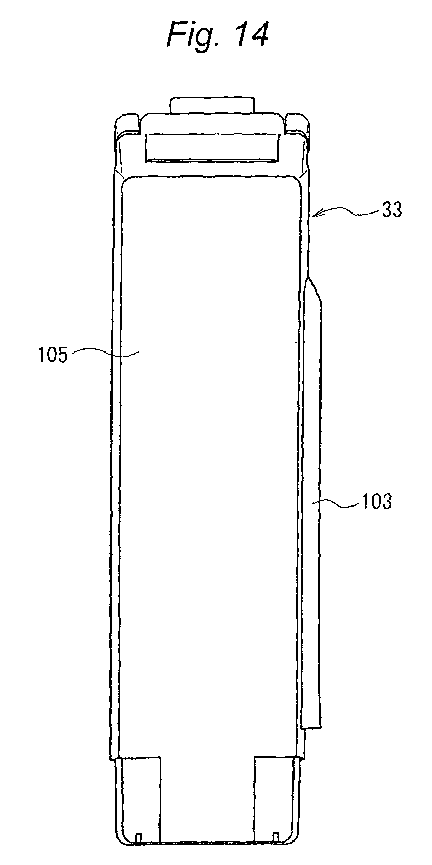

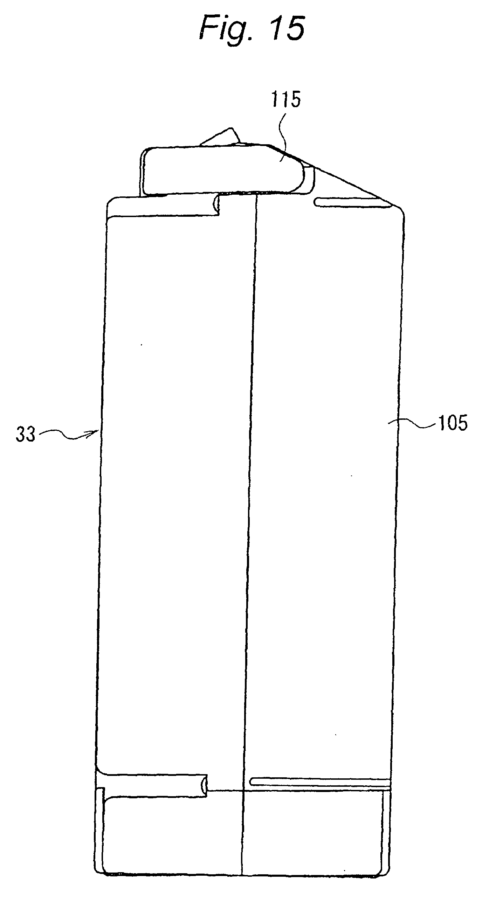

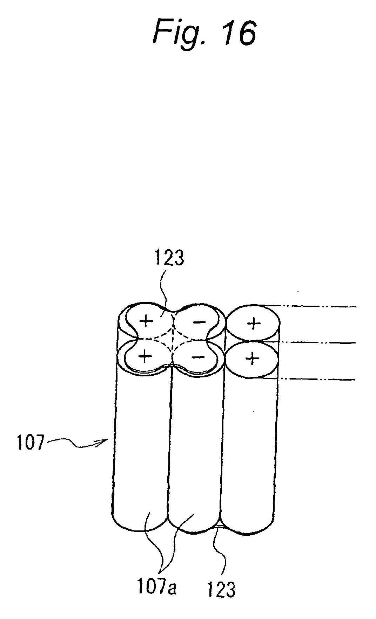

An embodiment will be concretely described below with reference to Figs. 1 to 16.

Fig. 1 shows an electrically-driven two-wheeler 1 constituting an electrically-driven vehicle.

A vehicle body frame 3 of the electrically-driven two-wheeler 1 is configured to be arranged substantially in parallel to be made of a hollow pipe to comprise an inclined portion 1a inclined upward and a horizontal portion 1b extending rearward from the inclined portion 1a, a front end of the upwardly inclined portion 1a being welded unitarily to a vertically lengthy head pipe 5. The head pipe 5 is provided therein with a steering shaft (not shown), and mounts to its upper end handles 7 (its opposite side being not shown). A front fork 9 is mounted to a lower end of the head pipe, and a front wheel 13 is pivotally mounted on the front fork 9 through an axle shaft 11.

One of the right and left handles 7 is provided with a brake bar (not shown), with which an actuating lever 14 of a brake device of the front wheel 13 is operated, and the other of the handles 7 serves as a throttle grip.

An upper cover 15 and an under cover 16 are provided on an upper surface side and a lower surface side of the vehicle body frame 3, respectively, to extend along the vehicle body frame 3, a horizontal area of the upper cover 15 serving as a foot rest portion 15a.

A base 19 supporting a seat 17 rises upward from a rear end of the vehicle body frame 3, and a swing arm 23 extends rearward from the rear end through a pivot 21 provided on a rear arm bracket 20.

The swing arm 23 comprises a rear wheel 25 serving as a drive wheel and a side stand 29 constantly biased to a storage state by a return spring 27 and suspended vertically swingably through a rear cushion 31.

In addition, the rear cushion 31 is mounted and supported on a mount bracket 38 of a base frame 37.

The rear wheel 25 comprises an electrically-driven power unit 35 with a mounted battery 33, described later, serving as a power source, and is given torque directly from the electrically-driven power unit 35.

Meanwhile, the base 19 is inclined rearward at a predetermined angle relative to a vertical position to define large open spaces forwardly and rearwardly of the base 19 and above the rear wheel 25.

The forward open space ensures a wide foot rest to achieve an improvement in the getting-on-and-off quality. The rearward open space cooperates with the forward open space to offer a simple and light outward appearance to the vehicle. The base 19 is configured to comprise the base frame 37 composed of a pair of right and left pipes extended upward at the same inclined angle as that of the base 19 from the rear end of the vehicle body frame 3, and a base casing 39 provided inside the base frame 37 to surround a periphery of the same.

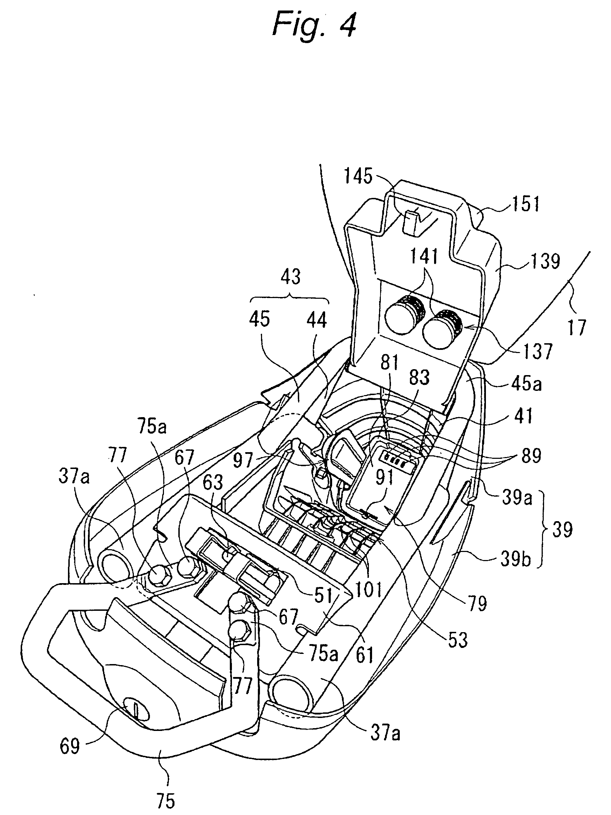

The base casing 39 is formed by butt-joining respective end edges of a front casing 39a and a rear casing 39b as shown in Fig. 4 from front and back as shown in Fig. 4, and an inner space in the base casing serves as a battery mounting chamber 41, in which the mounted battery 33 is mounted.

In addition, the base 19 is formed from the base frame 37 and the base casing 39, and the base frame 37 functions as a strength member to ensure strength and rigidity, so that there is obtained an advantage that the base casing 39 can be formed to be small in plate thickness, while the base casing 39 itself possesses strength and rigidity to thereby make a construction possible, in which the base frame 37 is omitted.

The base frame 37 of the base 19 serves as a support member for the rear cushion 31 described above and comprises an upwardly inclined extension 37a bent at a predetermined angle and extended rearward, and a seat support stay 43 supporting the seat 17.

Provided on the upwardly inclined extension 37a of the base frame 37 are a latch mechanism 51, described later, which cooperates with a striker 49 provided on the seat 17 to constitute a seat lock, in addition to auxiliary parts such as a tail lamp 47 or the like, as shown in Fig. 1.

The seat support stay 43 comprises a first support stay member 44 formed to be U-shaped, and a second support stay member 45, both ends of the first support stay member 44 being welded unitarily to the base frame 37. The second support stay member 45 is arranged substantially horizontal and U-shaped such that a connection 45a connecting both sides faces forward, the both sides being welded unitarily to the upwardly inclined extension 37a of the base frame 37. Also, portions close to the connection 45a connecting the both sides are welded unitarily to the first support stay member 44.

The seat 17 forms a roof covering an upper opening of the battery mounting chamber 41, and the upper opening defines a taking-in-and-out port 53 for the battery mounting chamber 41 when opened as shown in Fig. 4.

In this case, the taking-in-and-out port 53 can be provided forwardly or laterally of the base 19.

With the embodiment, design is made possible without any influence on a mount construction of the upper seat 17, which is very favorable in terms of freedom in design.

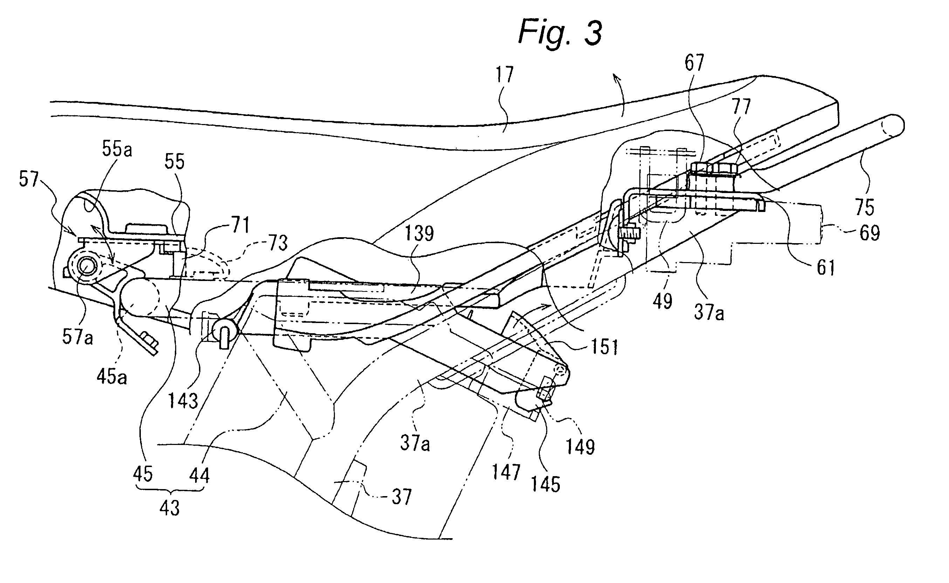

The seat 17 is shaped to follow an inner seat frame 55, and its lower side follows the second support stay member 45 of the seat support stay 43 and the upwardly inclined extension 37a of the base frame 37 as shown in Fig. 3, the seat being shaped such that its rear end side is upwardly turned with a forward hinge member 57 as a fulcrum.

The hinge member 57 supporting the seat 17 has its one end fixed to the connection 45a of the second support stay member 45 to be able to turn about a hinge pin 57a.

As shown in Fig. 1, a hook 59 is provided on a forward, upper end of the base frame 37 below a front end side of the seat 17, and a hook recess 55a is provided on the seat frame 55 so as not to interfere with the hook 59 when the seat is turned forward with the hinge member 57 as a fulcrum.

A vinyl bag is hung on the hook 59 at the time of, for example, shopping in a convenience store or the like, and can be interposed between both legs when a rider is seated on the seat 17, so that it is possible to temporarily hold the vinyl bag with a sense of security during driving.

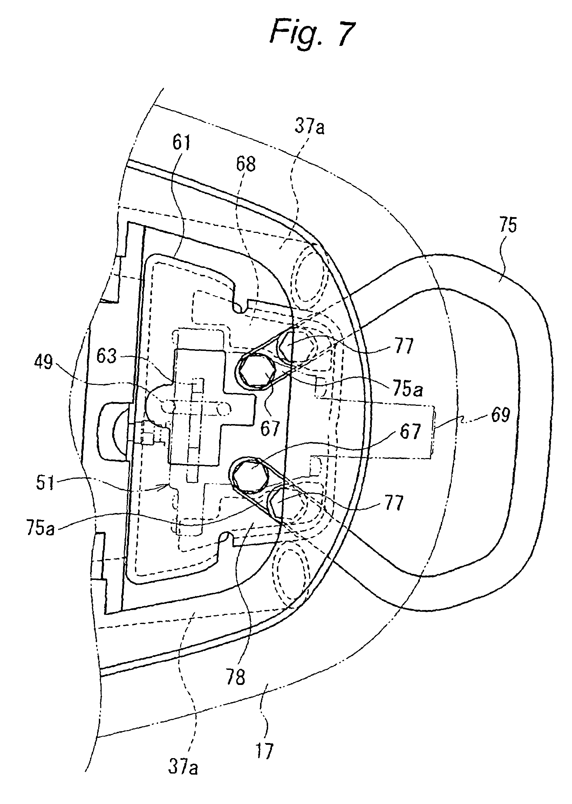

The seat lock of the seat 17 is composed of the striker 49 and the latch mechanism 51 as shown in Figs. 3 and 7, the striker 49 being provided on the seat frame 55 disposed on a rear end side of the seat 17. With the latch mechanism 51, a housing 65 having a latch 63 detachably engaging with the striker 49 is fixed to and supported on a base member 61, which is supported at its both ends on the right and left upwardly inclined extension 37a of the base 19, by means of bolts 67 and nuts 68 serving also as a reinforcement panel. When the latch 63 engages with the striker 49, there can be obtained a lock state (dotted lines in Fig. 1), in which a key cylinder 69 provided at the back of the base frame 37 is lockingly operated by means of a key (not shown) to make it impossible to open the seat 17, and a lock release state (chain lines in Fig. 1), in which the seat 17 can be opened by a lock release operation through the key cylinder 69.

In this case, it is desirable to provide a helmet support wire 73 below the seat 17 put in the lock state by the key cylinder 69.

One end of the helmet support wire 73 is fixedly supported on the seat frame 55 through the hinge member 57. The other end of the helmet support wire is free to constitute means capable of engaging and disengaging from a fixed pin 71 provided on the second support stay member 45 of the seat support stay 43.

Thereby, the helmet support wire 73 is hung and passed through a fixing band of a helmet and then caused to engage with the fixed pin 71 to bring about the lock state, in which the seat 17 is closed, whereby it is possible to leave the vehicle with leaving the helmet without anxiety.

The bolts 67 for fixedly supporting the housing 65 of the latch mechanism 51 and the nuts 68 serving also as a reinforcement panel are constructed t6 serve as means for mounting of a handle standing 75 as shown in Fig. 7.

The handle standing 75 protrudes from the back of the seat 17 in an arch manner, and is used when the vehicle body is somewhat lifted upon application of the side stand 29, or used so that, for example, a length of wire is roped on the handle standing to hold down the vehicle body downward to immobilize the same when the vehicle is transported by a truck or the like.

Both mount portions 75a of the handle standing 75 are secured at two locations such that tip end sides at first locations provide a construction, in which the bolts 67 and the nuts 68 for fixedly supporting the housing 65 on the base member 61 are used to overlappingly join three elements, that is, the mount portions 75a of the handle standing 75, the base member 61, and the housing 65 from above in this order, as described above. Base end sides of the mount portions 75a at second locations are overlappingly joined to an upper surface of the base member 61 by means of bolts 77 and nuts 78 serving as a reinforcement panel.

Thereby, since the bolts 67 and the nuts 68 at the first locations for fixation of the mount portions 75a of the handle standing 75 serve also as support means for fixedly supporting the housing 65 of the latch mechanism 51, it is possible to achieve reduction in the number of parts, which is very favorable in terms of cost and lightening. Also, two-point support exhibits great strength and rigidity for an upwardly acting moment when the vehicle is lifted, and a downwardly acting moment when the vehicle is held down.

Meanwhile, the battery mounting chamber 41 is defined by the base frame 37 to assume a vertically lengthy cylinder, of which an upper opening defines the taking-in-and-out port 53 as described above. A lower bottom of the chamber defines a battery support tray 79 supporting the mounted battery 33, the tray being in an inclined position to rise forward corresponding to the base 19 inclined rearward at a predetermined angle.

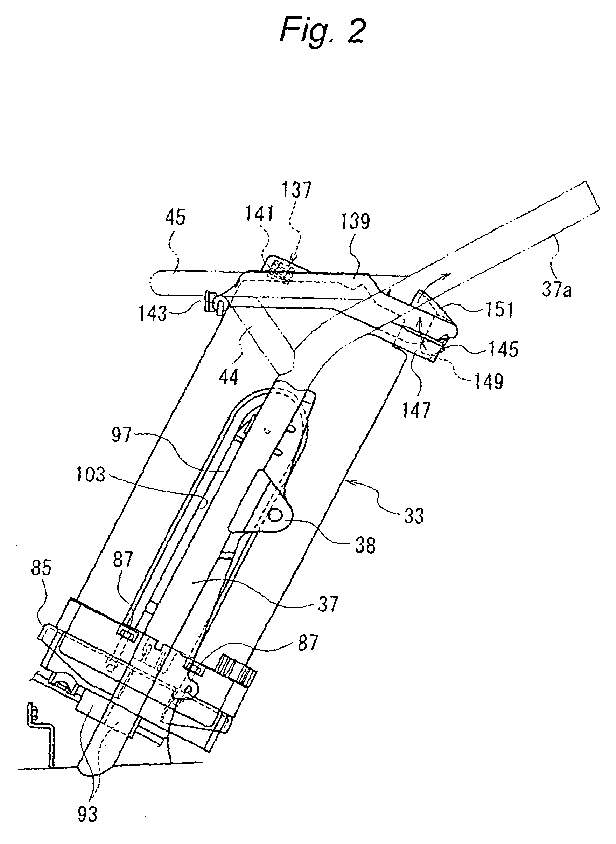

The battery support tray 79 is made of a synthetic resin material being an insulation to assume an independent shape, in which peripheral walls 83 rise a small distance from a bottom 81. One of both sides of the battery support tray 79 is fixedly supported on a mount bracket 85, which is fixed to the left vehicle body frame 3 juxtaposed as shown in Fig. 2, by bolts 87. Although not shown, a right side is fixedly supported in the same manner as the left side to function as a cross member for the respective vehicle body frames 3 arranged in parallel.

Positive and negative terminals, and respective joining terminals 89 for communication, arranged between them are provided on a forward, upwardly inclined side of the bottom 81 of the battery support tray 79 to be arranged in a lateral row to be put together in a lower area.

Thereby, short distributing wires along the vehicle body frames 3 are serviceable as respective cables.

Also, a drain hole 91 is provided on a rearward, downwardly inclined side of the bottom 81 to quickly drain outside rainwater if it enters.

A back surface side of the bottom of the battery support tray 79 defines an area, in which cable connectors 93 join together, and is structured to prevent rainwater from acting directly from above.

In addition, a lower portion of the battery support tray 79 is configured such that the under cover 16 provided along the vehicle body frames 3 is extended below the battery support tray 79 as shown by dotted lines in Fig. 1 to prevent splash or the like from directly acting the area, in which cable connectors 93 join together, from below. The respective joining terminals 89 of the battery support tray 79 can be electrically connected to feeding terminals 95 of the mounted battery 33 inserted and set in the battery mounting chamber 41.

The mounted battery 33 is guided by a guide to be correctly inserted and set in the battery mounting chamber 41.

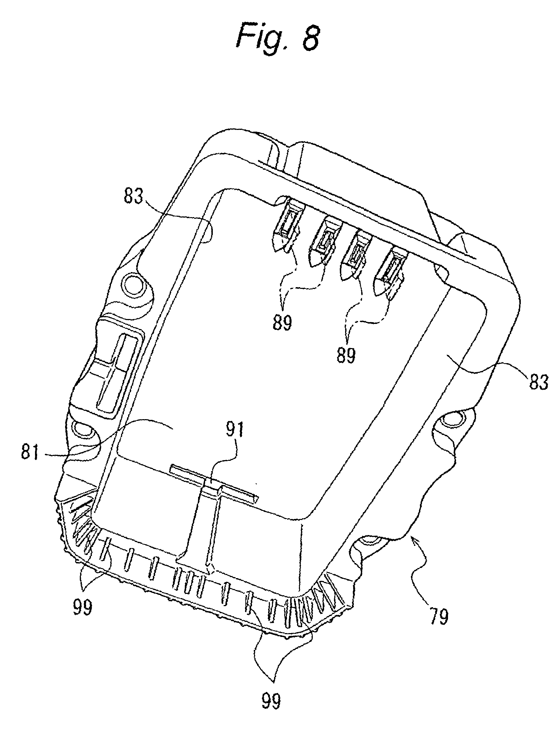

Concretely, a vertically lengthy guide member 97 is provided on a left side of the battery support tray 79 as shown in Fig. 4, a plurality of guide ribs 99 (see Fig. 8) are provided inside a rearward peripheral wall of the battery support tray 79, and a plurality of guide ribs 101 are provided inside the rear casing 39b, which constitutes the base casing 39. The guide ribs 99 inside the peripheral walls 83 and the guide ribs 101 inside the rear casing 39b are configured to be vertically contiguous to each other. The guide ribs 99 and the guide member 97 are set in that relationship, in which a guide recess 103 of the mounted battery 33 is correctly fitted onto the guide member 97 when the mounted battery 33 is caused to slide downward from the taking-in-and-out port 53, which is disposed upward and inclined rearward, with a lower end side of the battery getting on the guide ribs 101 inside the rear casing 39b.

In this case, it is desired that a head of the guide member 97 be formed to be arcuate so as to be fitted into the guide recess 103 even at a predetermined angle, not to mention fitting from right above, without strain. In addition, the guide ribs 99 provided inside the peripheral walls 83 are made small in rib diameter whereby it is possible to mold the independent battery support tray 79 without formation of shrinkage or the like.

Meanwhile, the mounted battery 33 comprises a battery storage chamber 109 for storing secondary cells 107 independently in a battery casing 105, and a battery control chamber 113 for storing a battery control circuit unit 111 independently, the battery storage chamber 109 and the battery control chamber 113 being ones, which are prevented by a centrally opened partition 114 from interfering with each other.

The battery casing 105 is formed to be longitudinal with a width smaller than a length, and has a handle portion 115 and a charging terminal port 117 at an upper end thereof.

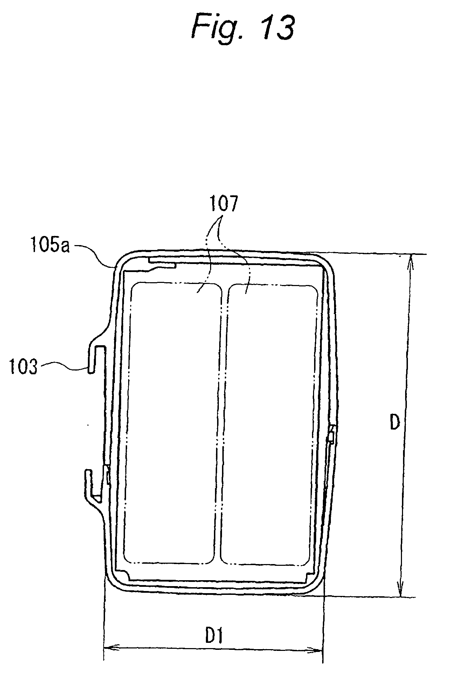

A casing body 105a of the battery casing 105 is formed to have a rectangular-shaped cross section with a width D in a cross direction being larger than a dimension D1 in a widthwise direction as shown in Fig. 13, and can be divided in the cross direction.

Provided on a left side of the casing body 105a is the guide recess 103 to be fitted from above onto the guide member 97 provided on the battery support tray 79. The guide recess 103 functions as a guide and also as a reinforcement member for ensuring the surface rigidity of the vertically lengthy casing body 105a. Drain holes 119 are provided in a rear portion of a bottom of the battery control chamber 113 disposed in a lower portion of the casing body 105a, and the feeding terminals 95 are provided in a forward portion of the bottom.

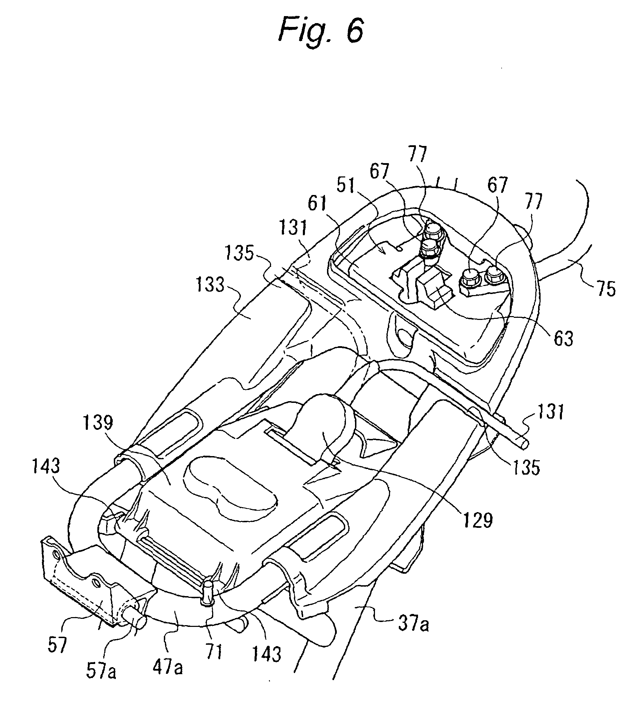

The secondary cells 107 are laid out and constructed such that a width of the secondary cells, that is, the width D1 of the casing body is limited to a small dimension since secondary cells 107a formed into a rod having the same cross section as shown in Fig. 6 are arranged in two rows and in plural in a vertical direction.

Electrode coupling terminals 123 formed to be cross-shaped are arranged on top and bottom as shown in the figure to connect the secondary cells 107a in series with positive terminals and negative terminals sequentially connected together.

The battery control circuit unit 111 controls charge and discharge of the secondary cells 107a, and its negative terminal is connected through a ground cable to a negative terminal of the secondary cell 107 arranged in a lowermost position, so that the ground cable suffices to have a shortest length.

Thereby, noise is eliminated, and so it is possible to limit malfunction, which is caused by influences of noise, to a small level.

The feeding terminals 95 of the battery control circuit unit 111 can be electrically connected to positive and negative terminals, and respective joining terminals 89 for communication, provided on the battery support tray 79 to be arranged in a lateral row.

Meanwhile, the charging terminal port 117 is shaped in a direction of connection to follow the upwardly inclined extension 37a of the base frame 37.

Thereby, the charging terminal port 117 and a charging terminal socket 129 for connection therewith can be prevented from excessively protruding upward at the time of charging, and the work for insertion into the charging terminal port 117 or the work for pulling-out can be smoothly performed along the upwardly inclined extension 37a without strain.

It is desired that a charging cord 131 of the charging terminal socket 129 for connection with the charging terminal port 117 can be taken out with either of a left side or a right side of the seat 17 selected because charging is performed in a state, in which the seat 17 is locked, from the antitheft point of view at the time of charging. Concretely, cord taking-out grooves 135 are provided right and left on a cover casing body 133, which covers the upwardly inclined extension 37a of the base frame 37 to ensure attractiveness, as shown in Fig. 6, whereby even when a wall or the like is present on one side, the charging work can be performed without any restriction on a location for charging.

The seat 17 is closed to cause a battery holding means 137 to restrain vertical movements of the mounted battery 33 mounted in the battery mounting chamber 41.

The battery holding means 137 is configured to comprise a middle lid 139 provided inside the seat 17 and a pair of holding springs 141 provided on the middle lid 139 as shown in Figs. 3 and 4.

The middle lid 139 is pivotally supported on the seat support stay 43 through a hinge member 143, and a hook pawl 145 at a tip end of the middle lid detachably engages with an engagement opening 149 of an engagement fitting 147, which extends from the upwardly inclined extension 37a of the base frame 37. The hook pawl 145 interlocks with an operating part 151, and the operating part 151 is operatively turned in a manner indicated by an arrow to retreat from the engagement opening 149, thus enabling releasing engagement of the hook pawl 145.

Accordingly, the seat 17 is closed to cause the holding springs 141 with the middle lid 139 therebetween to hold down the mounted battery 33 from above with their spring pressures to restrain vertical movements of the mounted battery, while the seat 17 is opened to release holding by the holding springs 141 whereby it is possible to take out the mounted battery 33.

In this case, the holding springs 141 may be provided directly on the seat frame 55 of the seat 17 with the middle lid 139 omitted.

With the electrically-driven vehicle constructed in this manner, the mounted battery 33 can be mounted with attractiveness and a wide foot rest space can be ensured by the open space forwardly of the base to make it easy to get on and off.

Meanwhile, when the vehicle is placed outdoor, the seat 17 covering the upper portion thereof serves as a roof even when it rains, so that rainwater is prevented from entering directly into the battery mounting chamber 41.

Meanwhile, when the seat 17 is opened, the work for taking the mounted battery 33 into and out of the taking-in-and-out port 53 disposed upward and the work for charging the mounted battery with electricity can be performed with ease. In this case, when the mounted battery 33 is inserted, it is accurately guided in a state, in which it is positioned by the guide member 97, with the result that the feeding terminals 95 are surely connected to the joining terminals 89 disposed downward.

In addition, while the embodiment has been described with respect to the electrically-driven two-wheeler, it can be also applied to electrically-driven three-wheeler.

The description above discloses an electrically-driven vehicle comprising a seat and a base supporting the seat on a vehicle body, and traveling with a mounted battery as a power source, the base constituting a battery mounting chamber, in which the mounted battery is mounted.

Thereby, the base supporting the seat on a vehicle body defines therein the battery mounting chamber, so that it is possible to mount the mounted battery without marring an outward appearance of the vehicle body. Also, the foot rest space forwardly of the base is not restricted. In addition, as described above, the mounted battery can be mounted and set in the base with good attractiveness. Also, since the mounted battery is arranged below the seat, the foot rest space is not subjected to restriction.

Also, the description discloses that the base supporting the seat may be smaller in lateral width than the seat, and may define widely opened spaces forwardly of the base and rearwardly of the base and above a rear wheel, the base being inclined rearward at a predetermined angle relative to a vertical position.

Thereby, portions forwardly and rearwardly of the base supporting the seat are largely opened to enable offering a simple and light outward appearance to the vehicle, and a large foot rest space is ensured forwardly of the base. Also, a simple and light, three-dimensional outward appearance can be obtained and a wide foot rest space can be ensured forward.

It is further disclosed that an upper opening of the battery mounting chamber may serve as a taking-in-and-out port for the mounted battery when the seat is opened.

Thereby, opening of the seat makes it possible to easily take a mounted battery in and out from above while standing without assuming a forced posture. In other words, it is possible to take in and out the mounted battery in the standing state without assuming a forced posture.

It is also disclosed that the taking-in-and-out port for the battery mounting chamber may be provided on an outer peripheral wall of the base supporting the seat.

Thereby, design of the taking-in-and-out port is made possible without any influence on an upper seat construction, which is very favorable in terms of freedom in design. In other words, the taking-in-and-out port is not affected by the upper seat structure, and is very favorable in terms of freedom in design.

Also, the description above discloses that an upper portion of the battery mounting chamber may be covered by the seat and a bottom of the battery mounting chamber may constitute a battery support tray provided with joining terminals, which can be electrically connected to feeding terminals of the mounted battery.

Thereby, the seat serves as a roof even when it rains, so that rainwater is prevented from entering into the battery mounting chamber. Meanwhile, the mounted battery is mounted and set in the battery mounting chamber, whereby feeding terminals of the mounted battery are electrically connected to joining terminals in a lower portion. As a result, it is possible to arrange a signal cable a short distance along a lower portion of the vehicle body. Thus, even when it rains in the event of being placed outdoor, the seat serves as a roof to prevent rainwater from entering directly into the battery mounting chamber.

Also, the description discloses that the battery support tray may be made an independent unit, of which a back surface of a bottom serves as an area, in which cable connectors for an electric power source or for communication are joined, to serve as a cross member, one end of which is fixed to a left vehicle body frame juxtaposed to constitute a vehicle body, the other end of which is fixed to a right vehicle body frame, and which connects the respective left and right vehicle body frames.

Thereby, the battery support tray is made easy to mold. Also, the cable connectors are prevented from being directly influenced by rainwater from above, and a stable state of connection is obtained over a long term. Thus, the battery support tray can be made easy to mold, and the cable connector can avoid direct influences from rainwater. Also, it is possible to achieve an increase in strength and rigidity of the right and left vehicle body frames. Namely, the vehicle body frames can be enhanced in strength and rigidity without the provision of any separate cross member, which is very favorable in terms of cost and lightening.

Also, the description discloses that joining terminals may be provided on an upwardly inclined side of the bottom of the battery support tray and that a drain hole may be provided on a downwardly inclined side of the bottom.

Thereby, even if rainwater or the like enters into the battery support tray, rainwater is not prevented from acting on the joining terminals disposed on the upwardly inclined side, and quickly drained outside from the drain hole on the downwardly inclined side. At least, even if rainwater enters into the battery support tray, it does not act directly on the joining terminals and is quickly drained from the drain hole.

Also, the description above discloses that the battery support tray may be provided on at least either of both sides thereof with a vertically lengthy guide member, by which the feeding terminals of the mounted battery are guided to the joining terminals on the bottom of the battery support tray.

Thereby, the mounted battery can be guided from the battery support tray in a lower area of the battery mounting chamber from an upper area thereof while put in an accurately positioned state, so that the feeding terminals of the mounted battery are surely connected to the joining terminals on the battery support tray. In other words, the mounted battery can be guided to the battery support tray disposed lowermost while being accurately positioned, so that the feeding terminals and the joining terminals can be surely connected to each other.

Also, the description above discloses that vertical movements of the mounted battery may be restrained when the seat is closed, and restraint is released to enable taking the mounted battery in and out when the seat is opened.

Thereby, the mounted battery mounted in the battery mounting chamber can be surely restrained in an operating state with the seat closed. Also, when the seat is opened, the mounted battery can be taken in and out, which facilitates maintenance or the like. Thus, vertical movements of the mounted battery mounted in the battery mounting chamber can be surely restrained when the seat is closed. Also, when the seat is opened, the mounted battery can be released from restraint to be easily taken in and out.

Also, the description above discloses that the mounted battery may be formed to be longitudinal with a width smaller than a length, and may be provided on at least an upper end thereof with a handle portion and a charging terminal port and on a lower end thereof with a battery control circuit unit, which is provided with feeding terminals.

Thereby, the mounted battery can be made to have a longitudinal, compact shape. Meanwhile, a ground cable for connection between a negative terminal of a cell arranged in a lowermost position of the mounted battery and a negative terminal of the feeding terminals of the battery control circuit unit can be made shortest, so that noise is eliminated during the operation and malfunction due to noise is suppressed.

Namely, the mounted battery can be made to have a longitudinal, compact shape, and the work of charging is facilitated. Also, a ground cable for connection between a negative terminal of a secondary cell arranged in a lowermost position and a negative terminal of the battery control circuit unit can be made shortest, so that noise is eliminated and malfunction due to noise is suppressed.

Also, the description above discloses that the mounted battery may be structured such that the handle portion and the charging terminal port are exposed to an upper portion of the battery mounting chamber when the seat is opened.

Thus, the seat is opened to enable exposing the handle portion and the charging terminal port. As a result, the work of taking in and out the mounted battery and the work of charging are made easy. Thereby, since the seat is opened to expose the handle portion and the charging terminal port, the mounted battery can be easily taken in and out by holding the handle portion. Meanwhile, the charging terminal socket of the charger can be easily connected to the charging terminal port from above without assuming a forced posture.

Also, the description above discloses that a direction, in which the charging terminal port of the mounted battery is inserted, may be one of an inclined axis inclined at a predetermined angle relative to a vertical axis.

Thereby, the charging terminal socket at the time of charging can be inclined when charging, for example, outdoor is performed in a state, in which the seat is closed, in view of safety, antitheft quality, or rainwater or the like, so that it is possible to decrease the space below the seat. Also, a cord for charging can be taken out from a left or right side of the seat, and the charging work can be performed without restriction in a location of charging even when a wall or the like is present on one side. Thus, supplying of a fuel makes it possible to obtain small-sized clean electric energy with high efficiency of use.

Also, the description above discloses that the mounted battery may be a fuel cell.

Thereby, chemical energy contained in a fuel can be converted directly into electric power, and so supplying of a fuel makes it possible to obtain small-sized clean electric energy with high efficiency of use.

Summarizing the above disclosure in short, to mount and set securely a mounted battery, which serves as a power source, with attractiveness and without getting in the way, there may be provided an electrically-driven vehicle, wherein an interior space in a base 19 supporting a seat 17 is made a battery mounting chamber 41, and a mounted battery 33 serving as a power source for an electrically-driven vehicle is mounted in the battery mounting chamber 41, and wherein there may be provided a power source holding means (137) restraining a vertical movements of the power source (33), in particular when the seat (17) is in its riding position, and when pivoted enabling mounting or taking out of the power source (33).

## Claims

1. Electrically-driven vehicle comprising a seat (17), a base (19) supporting the seat (17) on a body frame (3) and an electric power source (33), wherein the base (19) is provided with a mounting chamber (41) for receiving the power source (33), **characterized by** a power source holding means (137) restraining a vertical movements of the power source (33), in particular when the seat (17) is in its riding position, and when pivoted enabling mounting or taking out of the power source (33).

2. Electrically-driven vehicle according to claim 1, **characterized in that** the base (19) comprises a base frame (37), in particular composed of right and left pipes extending upward from a rear end of the body frame (3), and a base casing (39) provided inside the base frame (37), wherein the mounting chamber (41) is provided inside the base casing (39).

3. Electrically-driven vehicle according to claim 1 or 2, **characterized in that** the base (19) supporting the seat (17) is smaller in lateral width than the seat (17), and defines widely opened spaces forwardly of the base and rearwardly of the base (19) and above a rear wheel (25), the base (19) being inclined rearward at a predetermined angle relative to a vertical position.

4. Electrically-driven vehicle according any of the preceding claims, **characterized in that** an upper portion of the mounting chamber (41) is covered by the seat (17) in a riding position of the seat (17).

5. Electrically-driven vehicle according to any of the preceding claims, **characterized by** a hinge member (57) enabling pivoting of the seat (17) relative to the base (19)

6. Electrically-driven vehicle according to any of the preceding claims, **characterized in that** an upper opening of the mounting chamber (41) serves as a taking-in-and-out port (53) for the power source (33), when the seat (17) is pivoted.

7. Electrically-driven vehicle according to claim 6, **characterized in that** the taking-in-and-out port (53) is provided on an outer peripheral wall of the base (19) supporting the seat (17).

8. Electrically-driven vehicle according to any of the preceding claims, **characterized in that** a bottom portion (81) of the mounting chamber (41) constitutes a power source support tray (79) provided with joining terminals (89), which can be electrically connected to feeding terminals (95) of the power source (33), said power source support tray (79) in particular being an independent unit.

9. Electrically-driven vehicle according to claim 8, **characterized in that** cable connectors (93) for the power source (41) or for communication are joined on a back surface side of the bottom (81) of the power source support tray (79), and/or **in that** the power source support tray (79) serves as a cross member of the body frame (3) connecting respective parts of the base frame (37).

10. Electrically-driven vehicle according to claim 9, **characterized by** a cover member (16) provided along the body frame (3) being extended below the power source support tray (79), in particular below the area in which the cable connectors (93) are joined together.

11. Electrically-driven vehicle according at least one of the preceding claims 8 to 10, **characterized in that** joining terminals (89) are provided on an upwardly inclined side of the bottom (81) of the power source support tray (79) and a drain hole (91) is provided on a downwardly inclined side of the bottom (81).

12. Electrically-driven vehicle according to any of the preceding claims 8 to 11, **characterized by** guide means adapted to guide the power source to be correctly inserted and set in the mounting chamber (41).

13. Electrically-driven vehicle according to claim 12, **characterized in that** the power source support tray (79) is provided on at least either of both sides thereof with a vertically lengthy guide member, by which feeding terminals (95) of the power source (33) are guided to joining terminals (89) on the bottom of the power source support tray (79).

14. Electrically-driven vehicle according to any of the preceding claims, **characterized in that** the power source (33) is formed to be longitudinal with a width smaller than a length, and provided on at least an upper end thereof with a handle portion (115) and a charging terminal port (117) and on a lower end thereof with a power source control circuit unit, which is provided with feeding terminals.

15. Electrically-driven vehicle according to claim 14, **characterized in that** the power source (33) is structured such that the handle portion (115) and the charging terminal port (117) are exposed to an upper portion of the mounting chamber (41) when the seat (17) is pivoted.

16. Electrically-driven vehicle according to claim 14 or 15, **characterized in that** a direction, in which the charging terminal port (117) of the power source is inserted, is one of an inclined axis inclined at a predetermined angle relative to a vertical axis.

17. Electrically-driven vehicle according to any of the preceding claims, **characterized in that** the power source (33) is a battery or a fuel cell providing electric power.

18. Electrically-driven vehicle according to any of the preceding claims, **characterized in that** the vehicle is a two-wheeled vehicle or a three-wheeled vehicle.

## Patentansprüche

1. Elektrisch angetriebenes Fahrzeug mit einem Sitz (17), einer Basis (19), die den Sitz (17) auf einem Karosserierahmen (3) trägt, und einer elektrischen Energiequelle (33), wobei die Basis (19) mit einer Montagekammer (41) versehen ist, um die Energiequelle (33) aufzunehmen, **gekennzeichnet durch** eine Energiequellen- Halteeinrichtung (137), die vertikale Bewegungen der Energiequelle (33) beschränkt, insbesondere wenn der Sitz (17) in seiner Fahrposition ist, und wenn er geschwenkt ist, um das Montieren oder Herausnehmen der Energiequelle (33) zu ermöglichen.

2. Elektrisch angetriebenes Fahrzeug nach Anspruch 1, **dadurch gekennzeichnet, dass** die Basis (19) einen Basisrahmen (37) aufweist, insbesondere bestehend aus rechten und linken Rohren, die sich von einem hinteren Ende des Karosserierahmens (3) nach oben erstrecken, und ein Basisgehäuse (39), vorgesehen innerhalb des Basisrahmens (37), wobei die Montagekammer (41) innerhalb des Basisgehäuses (39) vorgesehen ist.

3. Elektrisch angetriebenes Fahrzeug nach Anspruch 1 oder 2, **dadurch gekennzeichnet, dass** die Basis (19), die den Sitz (17) trägt, in der seitlichen Breite kleiner als der Sitz (17) ist, und weit geöffnete Räume vor der Basis und hinter der Basis (19) und oberhalb eines Hinterrades (25) bildet, wobei die Basis (19) in einem vorbestimmten Winkel relativ zu der vertikalen Position nach hinten geneigt ist.

4. Elektrisch angetriebenes Fahrzeug nach einem der vorhergehenden Ansprüche, **dadurch gekennzeichnet, dass** ein oberer Abschnitt der Montagekammer (41 ) durch den Sitz (17) in einer Fahrposition des Sitzes (17) abgedeckt ist.

5. Elektrisch angetriebenes Fahrzeug nach einem der vorhergehenden Ansprüche, **gekennzeichnet durch** ein Gelenkteil (57), das ein Schwenken des Sitzes (17) im Verhältnis zu der Basis (19) ermöglicht.

6. Elektrisch angetriebenes Fahrzeug nach einem der vorhergehenden Ansprüche, **dadurch gekennzeichnet, dass** eine obere Öffnung der Montagekammer (41) als eine Einsetz- und Herausnehmöffnung (53) für die Energiequelle (33) dient, wenn der Sitz (17) geschwenkt ist.

7. Elektrisch angetriebenes Fahrzeug nach Anspruch 6, **dadurch gekennzeichnet, dass** die Einsetz- und Herausnehmöffnung (53) an einer äußeren Umfangswand der Basis (19), die den Sitz (17) trägt, vorgesehen ist.

8. Elektrisch angetriebenes Fahrzeug nach einem der vorhergehenden Ansprüche, **dadurch gekennzeichnet, dass** ein Bodenabschnitt (81) der Montagekammer (41) eine Energiequellen ― Tragschale (79), versehen mit Verbindungsanschlüssen (89), bildet, die mit den Zuführanschlüssen (95) der Energiequelle (33) elektrisch verbunden werden können, wobei die Energiequellen ― Tragschale (79) insbesondere eine unabhängige Einheit ist.

9. Elektrisch angetriebenes Fahrzeug nach Anspruch 8, **dadurch gekennzeichnet, dass** die Kabelverbinder (93) für die Energiequelle (41) oder zur Verbindung auf einer Rückseitenoberflächenseite des Bodens (81) der Energiequellen ― Tragschale (79) verbunden sind, und / oder dadurch, dass die Energiequellen ― Tragschale (79) als ein Kreuzteil des Karosserierahmens (3) dient, das die jeweiligen Teile des Basisrahmens (37) verbindet.

10. Elektrisch angetriebenes Fahrzeug nach Anspruch 9, **gekennzeichnet durch** ein Abdeckteil (16), vorgesehen entlang des Karosserierahmens (3), das sich unter der Energiequellen - Tragschale (79) erstreckt, insbesondere unter den Bereich, in dem die Kabelverbinder (93) miteinander verbunden sind.

11. Elektrisch angetriebenes Fahrzeug nach zumindest einem der vorhergehenden Ansprüche 8 bis 10, **dadurch gekennzeichnet, dass** Verbindungsanschlüsse (89) an einer aufwärts geneigten Seite des Bodens (81) der Energiequellen - Tragschale (79) vorgesehen sind und eine Ablaufbohrung (91) an einer abwärts geneigten Seite des Bodens (81) vorgesehen ist.

12. Elektrisch angetriebenes Fahrzeug nach einem der vorhergehenden Ansprüche 8 bis 11, **gekennzeichnet durch** eine Führungseinrichtung, vorgesehen um die Energiequelle zu führen, so dass sie richtig eingesetzt und in die Montagekammer (41) gesetzt wird.

13. Elektrisch angetriebenes Fahrzeug nach Anspruch 12, **dadurch gekennzeichnet, dass** die Energiequellen ― Tragschale (79) auf zumindest einer der beiden Seiten derselben mit einem vertikalen Längsführungsteil versehen ist, durch das Zuführungsanschlüsse (95) der Energiequelle (33) zu den Verbindungsanschlüssen (89) auf dem Boden der Energiequellen ― Tragschale (79) geführt werden.

14. Elektrisch angetriebenes Fahrzeug nach einem der vorhergehenden Ansprüche, **dadurch gekennzeichnet, dass** die Energiequelle (33) gebildet ist, Längsweise mit einer Breite kleiner als eine Länge zu sein, und an zumindest einem oberen Ende derselben mit einem Handgriffabschnitt (115) und einer Aufladeanschlussöffnung (117) versehen ist und an einem unteren Ende derselben mit einer Energiequellen- Steuerschaltkreiseinheit, die mit Zuführanschlüssen versehen ist.

15. Elektrisch angetriebenes Fahrzeug nach Anspruch 14, **dadurch gekennzeichnet, dass** die Energiequelle (33) derart aufgebaut ist, dass der Handgriffabschnitt (115) und die Aufladeanschlussöffnung (117) zu einem oberen Abschnitt der Montagekammer (41) freigelegt sind, wenn der Sitz (17) geschwenkt wird.

16. Elektrisch angetriebenes Fahrzeug nach Anspruch 14 oder 15, **dadurch gekennzeichnet, dass** eine Richtung, in der die Aufladeanschlussöffnung (117) der Energiequelle eingesetzt wird, eine einer geneigten Achse ist, geneigt in einem vorbestimmten Winkel relativ zu einer vertikalen Achse.

17. Elektrisch angetriebenes Fahrzeug nach einem der vorhergehenden Ansprüche, **dadurch gekennzeichnet, dass** die Energiequelle (33) eine Batterie oder eine Brennstoffzelle ist, die Elektroenergie bereitstellt.

18. Elektrisch angetriebenes Fahrzeug nach einem der vorhergehenden Ansprüche, **dadurch gekennzeichnet, dass** das Fahrzeug ein zweirädriges Fahrzeug oder ein dreirädriges Fahrzeug ist.

## Revendications

1. Véhicule à entraînement électrique comprenant une selle (17), une embase (19) supportant la selle (17) sur un corps de châssis (3) et une source de puissance électrique (33), dans lequel l'embase (19) comporte une chambre de montage (41) destinée à recevoir une source de puissance (33), **caractérisé par** des moyens de support de source de puissance (137) qui permettent de limiter des déplacements verticaux de la source de puissance (33), en particulier lorsque la selle (17) est située dans sa position de conduite, et lorsqu'elle est en pivotement afin de permettre le montage ou la dépose de la source de puissance (33).

2. Véhicule à entraînement électrique selon la revendication 1, **caractérisé en ce que** l'embase (19) comprend un châssis d'embase (37), se composant en particulier de tubes droit et gauche qui s'étendent vers le haut à partir d'une extrémité arrière du corps de châssis (3), et un carter d'embase (39) aménagé à l'intérieur du châssis d'embase (37), dans lequel la chambre de montage (41) est aménagée à l'intérieur du carter d'embase (39).

3. Véhicule à entraînement électrique selon la revendication 1 ou la revendication 2, **caractérisé en ce que** l'embase (19), qui supporte la selle (17), a une largeur latérale plus petite que la selle (17), et définit des espaces largement ouverts vers l'avant de l'embase et vers l'arrière de l'embase (19) et au-dessus d'une roue arrière (25), l'embase (19) étant inclinée vers l'arrière selon un angle prédéterminée par rapport à une position verticale.

4. Véhicule à entraînement électrique selon l'une quelconque des revendications précédentes, **caractérisé en ce qu'**une partie supérieure de la chambre de montage (41) est recouverte par la selle (17) lorsque la selle (17) est en position de conduite.

5. Véhicule à entraînement électrique selon l'une quelconque des revendications précédentes, **caractérisé par** un élément d'articulation (57) qui permet de faire pivoter la selle (17) par rapport à l'embase (19).

6. Véhicule à entraînement électrique selon l'une quelconque des revendications précédentes, **caractérisé en ce qu'**une ouverture supérieure aménagée dans la chambre de montage (41) sert d'orifice d'entrée et de sortie (53) de la source de puissance (33), lorsque la selle (17) est en pivotement.

7. Véhicule à entraînement électrique selon la revendication 6, **caractérisé en ce que** l'orifice d'entrée et de sortie (53) est aménagé sur une paroi périphérique externe de l'embase (19) qui supporte la selle (17).

8. Véhicule à entraînement électrique selon l'une quelconque des revendications précédentes, **caractérisé en ce qu'**une partie de fond (81) de la chambre de montage (41) constitue un support de chemin de câbles de source de puissance (79) comportant des bornes de connexion (89), qui peuvent être connectées électriquement à des bornes d'alimentation (95) de la source de puissance (33), ledit ensemble de support de chemin de câbles de source de puissance (79) étant en particulier un ensemble indépendant.

9. Véhicule à entraînement électrique selon la revendication 8, **caractérisé en ce que** des connecteurs de câble (93) destinés à la source de puissance (41) ou à la communication sont reliés sur un côté de surface arrière de l'embase (81) du support de chemin de câbles de source de puissance (79), et / ou **en ce que** le support de chemin de câbles de source de puissance (79) sert d'élément de croisement du corps de châssis (3) afin de connecter des parties respectives du châssis d'embase (37).

10. Véhicule à entraînement électrique selon la revendication 9, **caractérisé par** un élément de capot (16) disposé le long du corps de châssis (3) et qui s'étend en dessous du support de chemin de câbles de source de puissance (79), en particulier en dessous de la zone dans laquelle les connecteurs de câbles (93) sont reliés ensemble.

11. Véhicule à entraînement électrique selon au moins l'une des revendications précédentes 8 à 10, **caractérisé en ce que** les bornes de connexion (89) sont aménagées sur un côté incliné vers le haut du fond (81) du support de chemin de câbles de source de puissance (79), et qu'un orifice de purge (91) est aménagé sur un côté incliné vers le bas du fond (81).

12. Véhicule à entraînement électrique selon l'une quelconque des revendications précédentes 8 à 11, **caractérisé par** des moyens de guidage adaptés de manière à guider la source de puissance, afin qu'elle soit correctement introduite et ajustée dans la chambre de montage (41).

13. Véhicule à entraînement électrique selon la revendication 12, **caractérisé en ce que** le support de chemin de câbles de source de puissance (79) comporte au moins sur chacun des deux côtés de celui-ci un élément de guidage vertical sur la longueur, grâce auquel les bornes d'alimentation (95) de la source de puissance (33) sont guidées jusqu'au bornes de connexion (89) situées sur le fond du support de chemin de câbles de source de puissance (79).

14. Véhicule à entraînement électrique selon l'une quelconque des revendications précédentes, **caractérisé en ce que** la source de puissance (33) a une forme longitudinale et une largeur inférieure à sa longueur, et comporte sur au moins une extrémité supérieure de celle-ci une partie de poignée (115) et un orifice de borne de charge (117), et sur une extrémité inférieure de celle-ci une unité de circuit de commande de source de puissance, qui comporte des bornes d'alimentation.

15. Véhicule à entraînement électrique selon la revendication 14, **caractérisé en ce que** la source de puissance (33) est structurée de telle sorte que la partie de poignée (115) et l'orifice de borne de charge (117) sont à découvert sur une partie supérieure de la chambre de montage (41) lorsque a selle (17) est en pivotement.

16. Véhicule à entraînement électrique selon la revendication 14 ou la revendication 15, **caractérisé en ce qu'**une direction, dans laquelle est introduit l'orifice de borne de charge (117) de la source de puissance, est une direction qui a un axe incliné selon un angle prédéterminé par rapport à un axe vertical.

17. Véhicule à entraînement électrique selon l'une quelconque des revendications précédentes, **caractérisé en ce que** la source de puissance (33) est une batterie ou une pile à combustible fournissant une puissance électrique.

18. Véhicule à entraînement électrique selon l'une quelconque des revendications précédentes, **caractérisé en ce que** le véhicule est un véhicule à deux roues ou un véhicule à trois roues.
